# EUROPÄISCHE PATENTSCHRIFT

(11) **EP 1 292 424 B1**
(45) Veröffentlichungstag und Bekanntmachung des Hinweises auf die Patenterteilung: **23.04.2008**
(21) Anmeldenummer: 01949392.3
(22) Anmeldetag: 08.06.2001
(51) Int. Cl.: B23P 15/00, F16H 41/28, F16D 57/04

(54) **ANBRINGUNG VON SCHAUFELN IN HYDRODYNAMISCHEN MASCHINEN**
FITTING OF BLADES IN HYDRODYNAMIC MACHINES
FIXATION D'AUBES DANS DES MACHINES HYDRODYNAMIQUES

(30) Priorität: 17.06.2000 DE 10030029
(43) Veröffentlichungstag der Anmeldung: 19.03.2003
(73) Patentinhaber: ZF FRIEDRICHSHAFEN Aktiengesellschaft, 88038 Friedrichshafen (DE)
(72) Erfinder: BAUKNECHT, Gert, 88090 Immenstaad (DE); FRITZ, Walter, 88090 Immenstaad (DE); SKRABS, Alfred, 66271 Sitterswald (DE); MAYER, Reinhold, 88097 Eriskirch (DE)
(86) Internationale Anmeldenummer: PCT/EP2001/006532
(87) Internationale Veröffentlichungsnummer: WO 2001/098021

(56) Entgegenhaltungen:
- WO-A-98/06958
- US-A- 2 478 306
- US-A- 4 133 091
- US-A- 5 109 604
- PATENT ABSTRACTS OF JAPAN vol. 010, no. 301 (M-525), 14. Oktober 1986 (1986-10-14) -& JP 61 115631 A (TOSHIBA CORP), 3. Juni 1986 (1986-06-03)
- PATENT ABSTRACTS OF JAPAN vol. 015, no. 422 (M-1173), 25. Oktober 1991 (1991-10-25) -& JP 03 177651 A (MAZDA MOTOR CORP), 1. August 1991 (1991-08-01)

## Beschreibung

Die Erfindung betrifft ein Verfahren zur Herstellung von Bauteilen mit einer Beschaufelung in hydrodynamischen Maschinen und nach dem Verfahren hergestellte Bauteile

In hydrodynamischen Systemen, zu denen in Fahrzeuggetrieben und Fahrzeugantriebssträngen angeordnete Drehmomentwandler und verschleißfrei Zusatzbremseinrichtungen, sogenannte Retarder, zu zählen sind, werden Bauteile verwendet, die eine Beschaufelung aus einer Anzahl von Schaufeln aufweisen, um mit den verwendeten hydrodynamischen Flüssigkeiten zusammenzuwirken. Die Herstellung dieser Beschaufelungen sind entweder auf hohe Funktionalität oder auf eine hohe Kostenersparnis hin entwickelt worden.

Aufgrund von fehlender optimierter Fertigungstechnologien war bisher ein Zielkonflikt zwischen diesen beiden Ausrichtungen vorgegeben.

Aus der EP 0732519 A1 ist beispielgebend ein hydrodynamischer Retarder bekannt geworden, bei dem in einem Grundkörper Vertiefungen zur Positionierung der Schaufeln eingearbeitet werden, in denen die Schaufeln eingesetzt werden und die anschließend, beispielsweise durch Schweißen oder Hartlöten, mit dem Grundkörper verbunden werden. Eine formschlüssige Verbindung zur Übertragung der Kräfte findet nur bedingt statt. Durch die hohen spezifischen Belastungen, die im Retarderbetrieb auftreten können, z.B. durch Kavitation, ist diese Art der Verbindung riskant.

In der JP-A-61-115631 wird ein Verfahren zur Herstellulng von Bauteilen in hydrodynamischen Maschinen beschrieben, die eine Beschaufelung aufweisen, und mit einem Grundkörper sowie einer Vielzahl von mit dem Grundkörper zu verbindenden Schaufeln, wobei der Grundkörper im Randbereich Schlitze aufweist, in welche die Schaufeln gesteckt und unter ständiger Rotation der Drückwalzrolle formschlüssig mit dem Grundkörper verbunden werden.

Die JP-A-3-177651 bildet den nächstliegenden Stand der Technik und offenbart die Merkmale des Oberbegriffs des Anspruchs 1.

Der Erfindung liegt die Aufgabe zugrunde, einen Herstellungsprozess aufzuzeigen, der kostengünstig ist und eine sichere Funktionalität der Bauteile sichert.

Die Aufgabe wird gelöst durch ein Verfahren mit den Merkmalen des Anspruchs 1. Ausgestaltungen sind Gegenstand von Unteransprüchen.

Nach der Erfindung wird ein Verfahren zur Herstellung von Bauteilen in hydrodynamischen Maschinen vorgeschlagen, wobei die hydrodynamischen Maschinen eine Beschaufelung aufweisen, die durch eine Vielzahl von mit einem Grundkörper zu verbindenden Schaufeln gebildet wird. Die Schaufeln werden in einem Blechumformverfahren von einer Drückwalzrolle unter ständiger Rotation der Drückwalzrolle und ständig ausgeübtem Anpressdruck auf den Grundkörper formschlüssig mit dem Grundkörper verbunden. Der Grundkörper wird als vorgefertigter Torus von der Drückwalzrolle gegen die Schaufeln gedrückt, wobei die Schaufeln in einer Vorrichtung entgegen dem Anpressdruck der Drückwalzrolle gehalten werden. In einer Ausgestaltung des Verfahrens wirkt die Drückwalzrolle auf der den Schaufeln entgegengesetzt angeordneten Seite des Grundkörpers auf den Grundkörper ein. In einer Ausgestaltung wird die Drückwalzrolle rechtwinklig zur Außenkontur der Vorrichtung, in der die Schaufeln angeordnet werden, an dem Grundkörper entlang geführt. Eine Ausgestaltung zeigt, daß die Drückwalzrolle entgegen ihrer Rotationsrichtung an dem Grundkörper entlang geführt wird, um Material des Grundkörpers zur Bildung des Formschlusses in die Vertiefungen zwischen den Schaufeln zu drücken. In einer weiteren vorteilhaften Gestaltung werden die Schaufeln in der Vorrichtung gegen eine Außenkontur gedrückt, die der Kontur der Schaufeln entspricht, um die Formgebung der Schaufeln unter dem Anpressdruck der Drückwalzrolle konstant zu halten. Eine Ausgestaltung zeigt einen vorgeformten Grundkörper, der unter dem Anpressdruck der Drückwalzrolle bei gleichzeitiger Bildung des Formschlusses mit den Schaufeln seine endgültige Formgestaltung entsprechend der Außenkontur der Vorrichtung erhält.

Die Wandstärke der Schaufeln und/oder des Grundkörpers in ihrer Längenausdehnung und/oder in ihrer Breitenausdehnung kann unterschiedlich ausgestaltet werden. Durch die Verwendung einer Drückwalzrolle können auch Bauteile bearbeitet werden, die nicht über eine gleichbleibende Wandstärke verfügen, so daß die Wandstärke an eine optimale Funktionalität angepaßt werden kann. Der Grundkörper kann unterschiedlich Werkstoffe aufweisen. Der Grundkörper kann aus einer Alu-Knetlegierung bestehen. Die hydrodynamische Maschine kann als Drehmomentwandler für ein Fahrzeuggetriebe oder als hydrodynamischer Retarder betrieben werden, der ein Fahrzeug als Zusatzbremse zu der Reibungsbetriebsbremse bei der Verzögerung, insbesondere auf langen Gefällstrecken, unterstützt.

Die Erfindung wird anhand einer Zeichnung näher beschrieben:
Es zeigen:
- Fig. 1: einen Schnitt durch eine Vorrichtung und
- Fig. 2: einen Schnitt durch den Grundkörper.

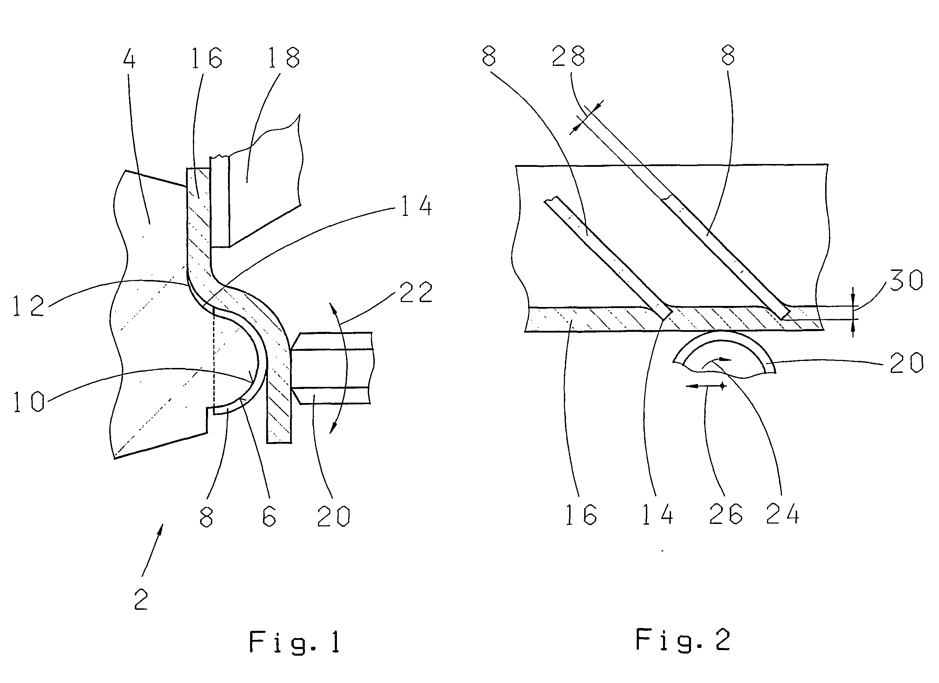

In der Fig. 1 wird eine Vorrichtung für das erfinderische Verfahren beschrieben. In einem nicht näher dargestellten Werkzeug 2 weist eine Vorrichtung 4 eine Außenkontur 6 auf, die Vertiefungen 14 für die Schaufelaufnahme beinhaltet. In diesen Vertiefungen 14 liegen die Schaufeln 8. Die Außenkontur 6 der Vorrichtung 4 entspricht im wesentlichen der Innenkontur der Schaufel 8. An ihrem einen Ende 12, welches aus der Vorrichtung 4 hervorsteht, wird die Schaufel 8 in den umgebenden Grundkörper 16 hineingedrückt. Der Grundkörper 16 ist ein Torus, der in dem Werkzeug 2 zwischen der Vorrichtung 4 und einer Haltevorrichtung 18 befestigt ist. Eine rotierende Drückwalzrolle 20 fährt in einem zweckmäßigen Abstand zur Außenkontur 6 der Vorrichtung 4, was durch die Pfeile 22 angedeutet wird, und drückt dabei mit einem Anpressdruck den Grundkörper 16 gegen die Vorrichtung 4 und die Schaufeln 8. Durch die Rotation der Drückwalzrolle 20 wird Material des Grundkörpers 16 in die Vertiefung zwischen die Schaufeln bewegt und umgibt das darin liegende Ende 12 der Schaufel 8, so daß sich zwischen dem Grundkörper 16 und der Schaufel 8 eine formschlüssige Verbindung ergibt, die auch dicht ist gegenüber dem in der hydrodynamischen Maschine verwendeten Medium, vorzugsweise Öl oder Wasser. Die Drückwalzrolle 20 drückt den Grundkörper 16 entlang der gesamten Kontur 6 gegen die Schaufel 8, so daß schließlich sowohl die Schaufel 8 als auch die Innenkontur des Grundkörpers 16 die Form der Außenkontur 6 annimmt. Die Schaufel 8 ist dann auf ihrer ganzen Länge im Grundkörper 16 befestigt.

In der Fig. 2 sind in den Grundkörper 16 eingedrückte Schaufeln 8 gezeigt. Die Drückwalzrolle 20 rotiert, beispielsweise entsprechend dem Pfeil 24, und wird an dem Grundkörper 16 entsprechend Pfeil 26 entlang geführt. Durch die Rotation unter Anpressdruck während des Vorbeibewegens wird das Material des Grundkörpers zur Bildung der formschlüssigen Verbindung zwischen Schaufel 8 und Grundkörper 16 in die Vertiefung 14 am Grundkörper 16 bewegt. Die Schaufel weist eine Wandstärke 28 auf und die Tiefe der Vertiefung 14 ist mit 30 bezeichnet.

Durch das erfindungsgemäße Verfahren werden kostengünstige und flüssigkeitsdichte Bauteile für hydrodynamische Maschinen herstellbar, die enge Toleranzen bei der Blechumformung gewährleisten und damit genaue Kennlinien für hydrodynamische Maschinen ermöglichen. Dies wird auch begünstigt durch die Möglichkeit einer sehr guten Toleranzhaltigkeit über den Verlauf einer Serie hinweg. Bei einem erforderlichen Werkzeugwechsel läßt sich eine gute Reproduzierbarkeit der eingestellten Maße erzielen. Durch das Verfahren können dünne, spitze Schaufeln mit glatten Oberflächen verwendet werden, was einen sehr guten Wirkungsgrad und eine hohe Leistungsdichte fördert. Die Kaltverfestigung und die Beherrschung von Druckeigenspannungen führt zu Gewichtsersparnissen, was auch durch variable Wandstärken beim Drückwalzen unterstützt wird. Somit ergibt sich eine relativ einfacher und kostengünstiger Herstellungsprozeß, der eine optimale Funktionalität garantiert.

### Bezugszeichen

- 2: Werkzeug
- 4: Vorrichtung
- 6: Außenkontur
- 8: Schaufel
- 10: Innenkontur
- 12: Schaufelende
- 14: Vertiefung
- 16: Grundkörper
- 18: Haltevorrichtung
- 20: Drückwalzrolle
- 22: Pfeil
- 24: Pfeil
- 26: Pfeil
- 28: Wandstärke
- 30: Tiefe

## Patentansprüche

1. Verfahren zur Herstellung von Bauteilen in hydrodynamischen Maschinen, die eine Beschaufelung aufweisen, mit einem Grundkörper (16) und mit einer Vielzahl von mit dem Grundkörper (16) zu verbindenden Schaufeln (8), die von einer Drückwalzrolle (20) unter ständiger Rotation der Drückwalzrolle (20) und ständig ausgeübtem Anpressdruck auf den Grundkörper (16) formschlüssig mit dem Grundkörper (16) verbunden werden wobei der Grundkörper (16) als vorgefertigter Torus von der Drückwalzrolle (20) gegen die Schaufeln (8) gedrückt wird, **dadurch gekennzeichnet, dass** die Schaufeln (8) in einer Vorrichtung (4) entgegen dem Anpressdruck der Drückwalzrolle (20) gehalten werden und in die Vertiefungen (14) vom Grundkörper (16) formschlüssig eingedrückt werden.

2. Verfahren nach Anspruch 1, **dadurch gekennzeichnet, dass** die Drückwalzrolle (20) auf der den Schaufeln (8) entgegengesetzt angeordneten Seite des Grundkörpers (16) auf den Grundkörper (16) einwirkt.

3. Verfahren nach einem der Ansprüche 1 und 2, **dadurch gekennzeichnet, dass** die Drückwalzrolle (20) rechtwinklig zur Außenkontur der Vorrichtung (4), in der die Schaufeln (8) angeordnet werden, an dem Grundkörper (16) entlang geführt wird.

4. Verfahren nach einem der Ansprüche 1 bis 3, **dadurch gekennzeichnet, dass** die Drückwalzrolle (20) entgegen ihrer Rotationsrichtung an dem Grundkörper (16) entlang geführt wird, um Material des Grundkörpers (16) zur Bildung des Formschlusses zwischen die Schaufeln zu drücken.

5. Verfahren nach einem der Ansprüche 1 bis 4, **dadurch gekennzeichnet, dass** die Schaufel (8) in der Vorrichtung (4) gegen eine Außenkontur (6) gedrückt wird, die im wesentlichen der Innenkontur (10) der Schaufel (8) entspricht, um die Formgebung der Schaufel (8) unter dem Anpressdruck der Drückwalzrolle (20) konstant zu halten.

6. Verfahren nach einem der Ansprüche 1 bis 5, **dadurch gekennzeichnet, dass** der Grundkörper (16) vorgefertigt ist und unter dem Anpressdruck der Drückwalzrolle (20) bei gleichzeitiger Bildung des Formschlusses mit den Schaufeln (8) seine endgültige Formgestaltung entsprechend der Außenkontur (6) der Vorrichtung (4) erhält.

## Claims

1. Method of manufacturing components with blading used in hydrodynamic engines, with a base body (16) and a plurality of blades (8) to be connected to the base body (16), which are positively connected to the base body (16) by a pressure-forming roller (20) with the pressure-forming roller (20) rotating constantly and exerting a constant contact pressure on the base body (16), which base body (16) in the form of a prefabricated torus is pressed against the blades (8) by the pressure-forming roller (20), **characterised in that** the blades (8) are retained in a device (4) opposing the contact pressure of the pressure-forming roller (20) and positively pressed into the recesses (14) of the base body (16).

2. Method as claimed in claim 1, **characterised in that** the pressure-forming roller (20) acts on the base body (16) from the side of the base body (16) disposed opposite the blades (8).

3. Method as claimed in one of claims 1 and 2, **characterised in that** the pressure-forming roller (20) is guided along the base body (16) at a right angle with respect to the external contour of the device (4) in which the blades (8) are disposed.

4. Method as claimed in one of claims 1 to 3, **characterised in that** the pressure-forming roller (20) is guided along the base body (16) in the direction opposite its direction of rotation in order to push material of the base body (16) between the blades to form the positive connection.

5. Method as claimed in one of claims 1 to 4, **characterised in that** the blades (8) in the device (4) are pressed against an external contour (6) which essentially corresponds to the internal contour (10) of the blade (8) in order to keep the shape of the blades (8) constant under the effect of the contact pressure of the pressure-forming roller (20).

6. Method as claimed in one of the claims 1 to 5, **characterised in that** the base body (16) is prefabricated and its final shape corresponding to the external contour (6) of the device (4) is imparted to it under the effect of the contact pressure of the pressure-forming roller (20) at the same time as the positive connection with the blades (8) is being formed.

## Revendications

1. Procédé de fabrication d'éléments de machines hydrodynamiques qui comportent un ailettage comprenant un corps de base (16) et une pluralité d'ailettes (8) qui doivent être reliées au corps de base (16) et qui sont reliées au corps de base (16) par complémentarité de forme par une molette de fluotournage (20) avec rotation constante de la molette de fluotournage (20) et avec une pression de serrage exercée en permanence sur le corps de base (16), dans lequel le corps de base (16), constitué par un tore préalablement fabriqué, est pressé contre les ailettes (8) par la molette de fluotournage (20), **caractérisé en ce que** les ailettes (8) sont retenues dans un dispositif (4) l'encontre de la pression de serrage de la molette de fluotournage (20) et enfoncées dans les évidements (14) du corps de base (16) en réalisant une liaison par complémentarité de forme.

2. Procédé selon la revendication 1, **caractérisé en ce que** la molette de fluotournage (20) agit sur le corps de base (16), sur le côté du corps de base (16) qui est situé à l'opposé des ailettes (8).

3. Procédé selon l'une des revendications 1 et 2, **caractérisé en ce que** la molette de fluotournage (20) est guidée le long du corps de base (16) dans une direction perpendiculaire au profil extérieur du dispositif (4) dans lequel les ailettes (8) sont disposées.

4. Procédé selon l'une des revendications 1 à 3, **caractérisé en ce que** la molette de fluotournage (20) est guidée le long du corps de base (16) dans le sens inverse de son sens de rotation, pour refouler de la matière du corps de base (16) entre les ailettes afin de former la liaison par complémentarité de forme.

5. Procédé selon l'une des revendications 1 à 4, **caractérisé en ce que**, dans le dispositif (4), les ailettes (8) sont pressées contre un profil extérieur (6) qui correspond sensiblement au profil intérieur (10) des ailettes (8), afin de maintenir la conformation des ailettes (8) constante sous la pression de serrage de la molette de fluotournage (20).

6. Procédé selon l'une des revendications 1 à 5, **caractérisé en ce que** le corps de base (16) est fabriqué préalablement et qu'il reçoit sa conformation définitive qui correspond au profil extérieur (6) du dispositif (4) sous l'effet de la pression de serrage de la molette de fluotournage (20), avec formation simultanée de la liaison par complémentarité de forme avec les ailettes (8).
